# EUROPÄISCHE PATENTSCHRIFT

(11) **EP 0 840 662 B1**
(45) Veröffentlichungstag und Bekanntmachung des Hinweises auf die Patenterteilung: **10.02.1999**
(21) Anmeldenummer: 96922026.8
(22) Anmeldetag: 24.06.1996
(51) Int. Cl.: B23K 9/32

(54) **VORRICHTUNG ZUM SPRÜHEN EINES ANTIHAFTMITTELS IN EINEN SCHWEISSBRENNER**
DEVICE FOR SPRAYING AN ADHESION PREVENTION AGENT INTO A WELDING TORCH
DISPOSITIF DE PULVERISATION D'UN AGENT ANTI-ADHESION DANS UN CHALUMEAU DE SOUDAGE

(30) Priorität: 24.07.1995 AT 403/95 U
(43) Veröffentlichungstag der Anmeldung: 13.05.1998
(73) Patentinhaber: Hoffmann, Hans, 5026 Salzburg (AT)
(72) Erfinder: Hoffmann, Hans, 5026 Salzburg (AT)
(74) Vertreter: Berngruber, Otto, Dr. Dipl.-Chem.
(86) Internationale Anmeldenummer: EP9602745
(87) Internationale Veröffentlichungsnummer: WO9703786

(56) Entgegenhaltungen:
- EP-A- 0 090 233
- DE-A- 2 135 545
- DE-A- 2 943 650
- DE-A- 4 426 993
- PATENT ABSTRACTS OF JAPAN vol. 9, no. 111 (M-379) [1834] , 15.Mai 1985 & JP,A,59 232674 (SEIKEN K.K.), 27.Dezember 1984,

## Beschreibung

Die Erfindung bezieht sich auf eine Vorrichtung mit einer Düse zum Sprühen eines Antihaftmittels gegen Schweißspritzer in den ringförmigen Freiraum zwischen der Innenwand der Gasdüse und der Außenwand der Stromkontaktdüse.

In der Gasdüse eines Schutzgas-Schweißbrenners ist die Stromkontaktdüse angeordnet, durch die sich die Drahtelektrode erstreckt. Das hintere Ende der Stromkontaktdüse ragt in den hülsenförmigen Düsenstock, der Querbohrungen zum Durchtritt des Schutzgases in den ringförmigen Freiraum zwischen der Gasdüseninnenwand einerseits und der Außenwand der Stromkontaktdüse und des Düsenstocks andererseits aufweist. Dieser Freiraum muß von Schweißspritzern der abschmelzenden Drahtelektrode freigehalten werden, um die Funktion des Schweißbrenners nicht zu beeinträchtigen.

Dazu werden Antihaftmittel oder Trennmittel gegen das Anhaften von Schweißspritzern verwendet, meist Lösungen von Fetten oder Ölen in organischen Lösungsmitteln oder wässrige Öl-Emulsionen.

Das Antihaftmittel wird mit einer Sprühvorrichtung mit einer Sprühdüse in den ringförmigen Freiraum zwischen der Gasdüseninnenwand und der Außenwand der Stromkontaktdüse gesprüht. Die Sprühvorrichtungen können dabei sehr unterschiedlich ausgebildet sein. So werden bei Schweißautomaten im allgemeinen Sprühvorrichtungen verwendet, die mit Preßluft betrieben werden. Bei Handschweißpistolen werden meist Treibgasspraydosen verwendet, oder in neuerer Zeit aus Gründen des Umweltschutzes Sprayeinrichtungen mit einer Handpumpe. Dabei soll ein möglichst dünner gleichmäßiger Film des Antihaftmittels auf die den erwähnten Freiraum in der Gasdüse begrenzenden Flächen aufgetragen werden. Dies ist mit den bekannten Sprühvorrichtungen jedoch nicht möglich.

Aufgabe der Erfindung ist es, eine Sprühvorrichtung bereitzustellen, mit der eine optimale Benetzung der den erwähnten Freiraum in der Gasdüse begrenzenden Fläche mit dem Antihaftmittel-Sprühnebel erzielt wird.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Die erfindungsgemäße Vorrichtung weist vor der Sprühdüse einen daran befestigten koaxialen Anschlag, beispielsweise einen Ring oder einen Trichter auf, in den das vordere Ende der Gasdüse gesteckt wird. Dadurch wird die Gasdüse gegenüber der Sprühdüse zentriert. Da die Drahtelektrode vorne aus der Stromkontaktdüse ragt, ist der Anschlag im Abstand von der Sprühdüse angeordnet.

Zur Führung des aus der Sprühdüse austretenden Antihaftmittel-Sprühnebels ist eine Hülse vorgesehen, die in den ringförmigen Freiraum zwischen der Innenwand der Gasdüse und der Außenwand der Stromkontaktdüse ragt. Dieser Freiraum wird dadurch in einen Sprühnebel-Einströmbereich zwischen Hülse und Stromkontaktdüse und einen Sprühnebel-Ausströmbereich zwischen Hülse und Gasdüse unterteilt. Der Sprühnebel tritt konzentrisch in den Einströmbereich ein und nach Strömungsumkehr über den Aussströmbereich aus. Auf diese Weise wird ein Sprühnebelstau im ringförmigen Freiraum des Brenners verhindert. Durch das gegenläufige Bestreichen der Außenwand der Stromkontaktdüse und der Innenwand der Gasdüse mit dem Sprühnebel wird eine optimale Benetzung der den erwähnten Freiraum begrenzenden Flächen mit Antihaftmittel erzielt.

Vorzugsweise ist die Sprühnebelführungshülse gegenüber der Sprühdüse so angeordnet, daß ein Ringspalt zwischen der Hülse und der Sprühdüse gebildet wird.

Dadurch bildet die Hülse ähnlich einer Wasserstrahlpumpe das Mantelrohr eines Injektors. Das heißt, das mit hoher Geschwindigkeit aus der Sprühdüse austretende Antihaftmittel oder Antihaftmittel/Gas-Gemisch reißt in der Hülse befindliche Luft mit, wodurch über den Ringspalt weitere Luft angesaugt und damit der Volumenstrom des Antihaftmittel/Gas-Gemisches vergrößert wird. Damit wird zugleich eine weitere Zerstäubung des Antihaftmittelsprühnebels bewirkt. Auch kann die Gasmenge, die zum Versprühen der vorgegebenen Antihaftmittelmenge benötigt wird, reduziert werden.

Vorteilhafterweise ist die Sprühnebelführungsdüse zumindest in dem Bereich, der in den besagten Freiraum ragt, auf der Außenseite mit geraden oder gedrillten Längsrippen versehen. Durch Drehbewegung des Brenners um die Gasdüsenlängsachse kann die Innenwand der Gasdüse damit von leicht anhaftenden Schweißspritzern befreit und damit gereinigt werden. Auch ist es möglich, die Sprühnebelführungshülse um die Sprühdüsenachse drehbar auszubilden, um durch Drehbewegung der Hülse Schweißspritzer von der Innenwand der Gasdüse abzukratzen.

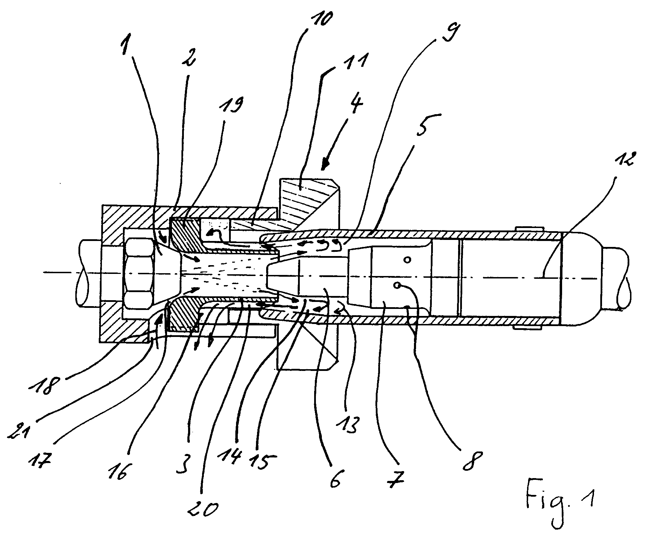

Nachstehend ist eine Ausführungsform der erfindungsgemäßen Vorrichtung anhand der Zeichnung näher erläutert, deren einzige Figur einen Schnitt durch die Vorrichtung mit der Gasdüse eines Schutzgas-Schweißbrenners zeigt.

Danach ist an einer Sprühdüse 1 einer sonst nicht dargestellten Sprühvorrichtung ein zylindrisches Gehäuse 2 befestigt, das zur Halterung einer Sprühnebelführungshülse 3 und eines Anschlages 4 für die Gasdüse 5 eines sonst nicht dargestellten Schutzgas-Schweißbrenners dient.

In der Gasdüse 5 ist die Stromkontaktdüse 6 angeordnet, durch die sich eine nicht dargestellte Drahtelektrode erstreckt.

Das hintere Ende der Stromkontaktdüse 6 ragt in den hülsenförmigen Düsenstock 7, der mit Querbohrungen 8 zum Durchtritt des Schutzgases in den ringförmigen Freiraum 9 zwischen der Innenwand der Gasdüse 5 einerseits und der Außenwand der Stromkontaktdüse 6 und des Düsenstocks 7 andererseits aufweist.

Da die nicht dargestellte Drahtelektrode vorne aus der Gasdüse 5 herausragt, ist der Anschlag 4 mit entsprechendem Abstand von der Sprühdüse 1 angeordnet. Der Anschlag 4 weist einen ringförmigen Abschnitt 10 auf, der in das zylindrische Gehäuse 2 gesteckt ist, sowie einen trichterförmigen Abschnitt 11. An der ringförmigen Kante zwischen dem ringförmigen Abschnitt 10 und dem trichterförmigen Abschnitt 11 des Anschlags 4 liegt die sich nach vorne leicht verjüngende Gasdüse 5 an. Durch den trichterförmigen Abschnitt 11 wird die Zentrierung der Gasdüse 5 erleichtert.

Die Sprühnebelführungsdüse 3, die wie das zylindrische Gehäuse 2 und der Anschlag 4 konzentrisch zur Sprühdüsenachse 12 angeordnet ist, ragt mit ihrem vorderen, von der Sprühdüse 1 abgewandten Ende in den ringförmigen Freiraum 9.

Wie durch die Pfeile 13 dargestellt, strömt dadurch der Sprühnebel in einem Einströmbereich 14 entlang der Außenwand der Stromkontaktdüse 6 und nach Strömungsumkehr in einem Ausströmbereich 15 entlang der Innenwand der Gasdüse 5 und von dort durch eine Ausnehmung 16 in dem Gehäuse 2 nach außen. Die Sprühnebelführungshülse 3 taucht dazu nur wenige Millimeter in den Freiraum 9 ein.

Zwischen dem vorderen Ende der sich nach vorne verjüngenden Sprühdüse 1 und der Sprühnebelführungshülse 3 ist ein Ringspalt 17 vorgesehen, über den nach Art eines Injektors oder einer Wasserstrahlpumpe zusätzliche Luft angesaugt wird, wie durch die Pfeile 18 verdeutlicht. Die Hülse 3 weist dabei in diesem Bereich zur Führung der angesaugten Luft 18 einen nach außen gekrümmten Endabschnitt 19 auf, der zugleich zu ihrer Befestigung am Gehäuse 2 dient. Für die Luft 18 ist ein Einlaß 21 in dem Gehäuse 2 vorgesehen.

Auf der Außenseite der sprühnebelführungshülse 3 sind Längsrippen 20 vorgesehen, mit denen Schweißspritzer von der Innenwand der Gasdüse 5 abgekratzt werden können, wenn der Brenner um die Sprühdüsenachse 12 gedreht wird.

## Patentansprüche

1. Vorrichtung zum Sprühen eines Antihaftmittels gegen Schweißspritzer mit einer Düse in den ringförmigen Freiraum zwischen der Innenwand der Gasdüse und der Außenwand der Stromkontaktdüse eines Schutzgas-Schweißbrenners, dadurch gekennzeichnet, daß vor der Düse (1) im Abstand ein koaxialer Anschlag (4) für die Gasdüse (5) zur Zentrierung derselben angeordnet ist und zur Führung des aus der Sprühdüse (1) austretenden Antihaftmittel-Sprühnebels eine Hülse (3) vorgesehen ist, die in den ringförmigen Freiraum (9) unter Bildung eines Einströmbereichs (14) für den Sprühnebel entlang der Außenfläche der Stromkontaktdüse (6) und eines Ausströmbereichs (15) für den Sprühnebel entlang der Innenwand der Gasdüse (5) ragt.

2. Vorrichtung nach Anspruch 1, dadurch gekennzeichnet, daß ein Ringspalt (17) zwischen der Hülse (3) und der Sprühdüse (1) vorgesehen ist.

3. Vorrichtung nach Anspruch 1 oder 2, dadurch gekennzeichnet, daß zumindest in dem in den ringförmigen Freiraum (9) ragenden Bereich der Hülse (3) auf der Außenseite der Hülse (3) Längsrippen (20) zum Abkratzen von Schweißspritzern von der Innenwand der Gasdüse (5) vorgesehen sind.

4. Vorrichtung nach Anspruch 3, dadurch gekennzeichnet, daß die Hülse (3) drehbar ausgebildet ist.

5. Vorrichtung nach Anspruch 1, dadurch gekennzeichnet, daß die Hülse (3) und die Düse (1) ein Werkstück sind.

6. Vorrichtung nach Anspruch 1 und 5, dadurch gekennzeichnet, daß im Mantel der Hülse (3) Öffnungen zum Ansaugen von Nebenluft ausgebildet sind.

## Claims

1. An apparatus for spraying an antistick agent against weld spatters with a nozzle into the annular free space between the internal wall of the gas nozzle and the external wall of the current contact nozzle of an inert gas welding torch, characterized in that a coaxial stop (4) for the gas nozzle (5) is disposed at a distance before the nozzle (1) for centering the gas nozzle, and a sheath (3) is provided for guiding the antistick agent mist passing out of the spray nozzle (1), said sheath protruding into the annular free space (9) so as to form a flow-in area (14) for the mist along the outside surface of the current contact nozzle (6) and a flow-out area (15) for the mist along the internal wall of the gas nozzle (5).

2. The apparatus of claim 1, characterized in that an annular gap (17) is provided between the sheath (3) and the spray nozzle (1).

3. The apparatus of claim 1 or 2, characterized in that longitudinal ribs (20) are provided on the outer side of the sheath (3), at least in the area of the sheath (3) protruding into the annular free space (9), for scraping weld spatters off the internal wall of the gas nozzle (5).

4. The apparatus of claim 3, characterized in that the sheath (3) is of rotatable design.

5. The apparatus of claim 1, characterized in that the sheath (3) and the nozzle (1) are one workpiece.

6. The apparatus of claims 1 and 5, characterized in that openings are formed in the jacket of the sheath (3) for sucking in secondary air.

## Revendications

1. Dispositif pour pulvériser au moyen d'une tuyère un produit antiadhésif pour éviter des gouttelettes de soudage dans l'espace libre annulaire entre la paroi intérieure de la tuyère à gaz et la paroi extérieure de la tuyère de contact de courant d'un chalumeau à souder sous gaz de protection, caractérisé en ce qu'une butée (4) coaxiale pour la tuyère de gaz (5) est agencée à distance avant la tuyère (1) pour centrer ladite tuyère de gaz et en ce qu'il est prévu une douille (3) pour guider le brouillard pulvérisé de produit antiadhésif sortant de la tuyère de pulvérisation (1), ladite douille faisant saillie dans l'espace libre (9) annulaire en formant une région d'admission (14) du brouillard pulvérisé le long de la surface extérieure de la tuyère de contact de courant (6) et une région d'éjection (15) du brouillard pulvérisé le long de la paroi intérieure de la tuyère de gaz (5).

2. Dispositif selon la revendication 1, caractérisé en ce qu'il est prévu une fente annulaire (17) entre la douille (3) et la tuyère de pulvérisation (1).

3. Dispositif selon l'une ou l'autre des revendications 1 et 2, caractérisé en ce qu'au moins dans la région de la douille (3) qui fait saillie dans l'espace libre (9) annulaire, il est prévu sur la face extérieure de la douille (3) des nervures longitudinales (20) destinées à racler les gouttelettes de soudage de la paroi intérieure de la tuyère à gaz (5).

4. Dispositif selon la revendication 3, caractérisé en ce que la douille (3) est réalisée rotative.

5. Dispositif selon la revendication 1, caractérisé en ce que la douille (3) et la tuyère (1) sont une pièce d'oeuvre.

6. Dispositif selon les revendications 1 et 5, caractérisé en ce que des ouvertures sont réalisées dans l'enveloppe de la douille (3) pour aspirer de l'air additionnel.
